# EUROPÄISCHE PATENTANMELDUNG

(11) **EP 0 790 428 A1**
(43) Veröffentlichungstag der Anmeldung: **20.08.1997**
(21) Anmeldenummer: 97102573.9
(22) Anmeldetag: 18.02.1997
(51) Int. Cl.: F16D 55/22, F16J 15/12

(54) **Sattelscheibenbremse**

(30) Priorität: 19.02.1996 DE 19606103
(71) Anmelder: PERROT BREMSEN GmbH, D-68229 Mannheim (DE)
(72) Erfinder: Wlodzimierz, Macke, Dipl.-Ing., 68542 Heddesheim (DE)
(74) Vertreter: Patentanwälte Leinweber & Zimmermann

(57) **Zusammenfassung**

Es wird eine Sattelscheibenbremse mit einem in mindestens zwei Teile (1,14) geteilten Sattel beschrieben, bei der die beiden Teile (1,14) derart angeordnet sind, daß ihre Stirnfläche (1.1,14.1) einander gegenüberliegen, die beiden Teile (1,14) gegeneinander vorgespannt und mindestens bei Betätigung der Bremse einer Kraft ausgesetzt sind, die gegen die Vorspannung wirkt. Erfindungsgemäß sind vorgesehen: Ein zwischen den beiden Teilen (1,14) angeordneter Abstandshalter (61), an dem die beiden Teile (1,14) mit ihren jeweiligen Stirnflächen (1.1,14.1) zur Übertragung der Vorspannkraft anliegen, dessen Anlageflächen aber kleiner als die Stirnflächen(1.1,14.1) sind, und ein elastisches Element (63), das zwischen den beiden Teilen (1,14) in Bereichen der Stirnflächen (1.1,14.1) angeordnet ist, die nicht an dem Abstandshalter (61) anliegen, und das von den Stirnflächen (1.1,14.1) gegen seine elastische Rückstellkraft komprimiert wird.

## Beschreibung

Die Erfindung betrifft eine Sattelscheibenbremse mit einem in mindestens zwei Teile geteilten Sattel, bei der
- die beiden Teile derart angeordnet sind, daß ihre Stirnflächen einander gegenüberliegen,
- die beiden Teile in Richtung gegeneinander vorgespannt sind und
- die beiden Teile mindestens bei Betätigung der Bremse einer Kraft ausgesetzt sind, die gegen die Vorspannung wirkt.

Sattelscheibenbremsen der vorstehend beschriebenen Art sind beispielsweise aus der DE-A-42 31 560 und der DE-A-43 07 019 bekannt.

Bei den bekannten Sattelscheibenbremsen ist der Sattel als Verschiebesattel ausgeführt, der bremsscheibenabgewandt eine Öffnung aufweist. In diese Öffnung wird die Zuspannvorrichtung eingesetzt, die sich üblicherweise parallel zur Bremsscheibenebene erstreckt.

Nach dem Einsetzen der Zuspannvorrichtung wird die Öffnung durch einen Deckel verschlossen. Der Deckel wird üblicherweise mittels Schrauben an dem Sattel befestigt. Dabei liegt eine Stirnfläche des Deckels an der entsprechenden Stirnfläche des Sattels über deren gesamten Umfang flächig an.

Der Deckel dient als Widerlager der Zuspannvorrichtung zur Einleitung der Bremskraft. Das heißt im Falle des Verschiebesattels, daß der Deckel die Reaktionskräfte zur Sattelverschiebung aufnimmt.

Die Verbindung von Sattel und Deckel muß zweierlei leisten: Zum einen muß sie den Sattelinnenraum vor Schmutz schützen, d.h. die Stirnflächen müssen zueinander parallel sein, damit sie eine das Eindringen von Schmutz unterbindende Anlage aneinander sicherstellen können. Zum anderen muß eine kraftschlüssige Verbindung durch die Schrauben sichergestellt sein. Auch dazu bedarf es der flächigen Anlage der beiden Stirnflächen aneinander, weshalb sie parallel zueinander ausgerichtet sein müssen. Insbesondere bei Vollbremsungen werden die auf den Sattel einerseits und auf den Deckel andererseits wirkenden Kräfte derart groß, daß ohne Belastung flächig aneinander anliegende Stirnflächen sich zumindest abschnittweise voneinander abheben, weshalb es zu Spaltbildungen zwischen den Stirnflächen kommt. Solche Spalte treten hauptsächlich in den Bereichen zwischen den Verschraubungen auf. Durch diese Spalte kann aber Schmutz o. dgl. in den Sattelinnenraum gelangen.

Es ist bereits auf verschiedene Weise versucht worden, das vorstehend beschriebene Problem zu lösen.

So ist beispielsweise vor dem Verschrauben der beiden Sattelteile gegeneinander mindestens eine Stirnfläche mit einer pastenähnlichen Substanz bestrichen worden. Diese Substanz ist jedoch beim Anziehen der Schrauben aus den Bereichen der Stirnflächen herausgequetscht worden.

Auch hat es Versuche gegeben, bei denen Weichmaterialien zwischen den Stirnflächen angeordnet worden sind. Diese Weichmaterialien führen aber aufgrund ihrer Elastizität dazu, daß beim Verschrauben keine kraftschlüssige Stirnflächenanlage gesichert werden kann, was im Laufe der Zeit zu einem "Nachsetzen" und somit zu einem Lösen der Verschraubungen führt. Die Folge davon sind insbesondere bei Vollbremsungen, also im Moment höchster Belastung des Widerlagers, eintretende Querkräfte, die zu einem Verschieben der Stirnflächen gegeneinander und damit zu einem Abreißen der Deckelverschraubungen führen. Die Folge ist ein schlagartiger Totalausfall der Bremse.

Der Erfindung liegt die Aufgabe zugrunde, eine Sattelscheibenbremse der vorstehend genannten Art anzugeben, bei der der Kraftschluß zwischen den beiden Teilen des Bremssattels nicht beeinträchtigt ist und bei der das Eindringen von Schmutz in den Sattelinnenraum auch bei starker Belastung unterbunden ist.

Erfindungsgemäß wird die gestellte Aufgabe bei einer Sattelscheibenbremse der eingangs genannten Art gelöst durch
- einen zwischen den beiden Teilen angeordneten Abstandshalter, an dem die beiden Teile mit ihren jeweiligen Stirnflächen zur Übertragung der Vorspannkraft anliegen, dessen Anlageflächen aber kleiner als die Stirnflächen sind, und
- ein elastisches Element, das zwischen den beiden Teilen in Bereichen der Stirnfläche angeordnet ist, die nicht an dem Abstandshalter anliegen, und das von den Stirnflächen gegen seine elastische Rückstellkraft komprimiert wird.

Mit anderen Worten sind in dem Bereich zwischen den beiden Stirnflächen ein Abstandshalter und ein elastisches Element "nebeneinander" vorgesehen. Der Abstandshalter stellt dabei den unbeeinträchtigten Kraftschluß zwischen den beiden Teilen des Bremssattels sicher. Das von den Stirnflächen komprimierte elastische Element wird sich bei Belastung der Bremse, d.h. dann, wenn die Stirnflächen sich "wölben" und somit nicht mehr parallel liegen, den durch die "Wölbung" entstandenen Spalt ausfüllen, so daß es zu keinem Augenblick eine Öffnung des Sattelinnenraumes nach außen gibt, durch die Schmutz in den Sattelinnenraum eindringen könnte. Da nur der Abstandshalter, nicht aber das elastische Element der Vorspannkraft zum Zusammenhalten der beiden Sattelteile ausgesetzt ist, besteht auch nicht die Gefahr des "Nachsetzens" des elastischen Elements, weshalb auch die aus dem "Nachsetzen" resultierenden oben beschriebenen Probleme nicht auftreten. Mithin ist die Funktionssicherheit der Bremse zuverlässig gewährleistet.

Der Abstandshalter kann prinzipiell aus jedem beliebigen Werkstoff sein, solange sichergestellt ist, daß er auch tatsächlich den vorgegebenen Abstand hält, d.h. solange er aus einem relativ harten Werkstoff ist. Bevorzugt ist der Abstandshalter jedoch aus Metall.

Der Abstandshalter kann beliebigen Querschnitt haben. Um aber die Fläche des Kraftflusses zwischen den beiden Stirnflächen möglichst groß zu halten, hat der Abstandshalter bevorzugt einen rechteckigen Querschnitt.

Das elastische Element kann prinzipiell aus einem beliebigen Elastomer sein. Bevorzugt ist es jedoch aus Gummi.

Um die Anordnung bzw. Anbringung des elastischen Elements zwischen den beiden Stirnflächen zu vereinfachen, ist das elastische Element vorteilhaft an dem Abstandshalter befestigt. Bevorzugt ist dabei eine Befestigung mittels Anvulkanisierens.

Das elastische Element kann an beliebiger Stelle neben dem Abstandshalter zwischen den beiden Stirnflächen angeordnet sein. Um aber das elastische Element vor äußeren Einflüssen zu schützen, ist es bevorzugt, daß das elastische Element auf der dem Innenraum des Sattels zugewandten Seite des Abstandshalters liegt.

Das elastische Element kann stückweise in Bereichen vorgesehen sein, in denen eine "Wölbung" der Stirnflächen bei Belastung zu erwarten ist. Dies ist insbesondere in den Bereichen zwischen Schrauben zur Befestigung der beiden Sattelteile aneinander der Fall. Bevorzugt ist das elastische Element jedoch entlang der Stirnfläche in Umfangsrichtung durchgehend ausgebildet. Dadurch ist nicht nur die Anbringung des elastischen Elements vereinfacht, es wird auch jeder eventuellen Spaltbildung vorgebeugt.

Prinzipiell kann das elastische Element beliebigen Querschnitt haben und beliebig nah an dem Abstandshalter angeordnet werden. Um jedoch zuverlässig auszuschließen, daß das elastische Element ganz oder teilweise zwischen den Abstandshalter und eine Stirnfläche der beiden Sattelteile gerät, ist es besonders bevorzugt, daß das elastische Element derart angeordnet und/oder gestaltet ist, daß bei nicht komprimiertem elastischen Element benachbart der dem elastischen Element zugewandten Kante der Anlagefläche des Abstandshalters an der Stirnfläche ein Freiraum festgelegt ist, der groß genug ist, um aufgrund der Vorspannung ausweichendes Material des elastischen Elements aufzunehmen.

Zur Verbesserung des Schutzes gegen das Eindringen von Schmutz ist das elastische Element vorzugsweise an den den Stirnflächen zugewandten Seiten abgeflacht, wodurch eine besonders große Anlagefläche erzielt wird.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: eine teilweise quer zur Bremsscheibenebene geschnittene Ansicht einer Sattelscheibenbremse,
- Fig. 2: einen Schnitt durch die Sattelscheibenbremse nach Fig. 1, entlang der Linie II-II in Fig. 1,
- Fig. 3: eine Teilschnittansicht der Bremse nach Fig. 2 entlang der Linie III-III,
- Fig. 4: eine Schnittansicht eines Ausführungsbeispiels der Erfindung,
- Fig. 5a bis 5c: Schnittansichten anderer Ausführungsformen der Erfindung,
- Fig. 6: eine Ansicht in Richtung "Z" in Fig. 4 und
- Fig. 7: eine Ansicht in Richtung "X" in Fig. 4.

Bei der in der Zeichnung dargestellten Sattelscheibenbremse handelt es sich um eine Gleitsattelscheibenbremse. Dabei übergreift ein Bremssattel 1 in üblicher Weise mit seinen beiden Schenkeln eine Bremsscheibe 2. Beidseitig der Bremsscheibe 2 sind Bremsbeläge 3, 4 an Belagträgern 5 in einem nicht dargestellten Bremsträger bzw. im Bremssattel 1 geführt und abgestützt.

In ebenfalls nicht dargestellter Weise ist der Bremssattel 1 mit Hilfe von Führungselementen quer zur Bremsscheibe 2 verschieblich gelagert. Der Bremssattel 1 weist einseitig eine Betätigungsvorrichtung 6 zur Beaufschlagung der Bremse auf.

Die Betätigungsvorrichtung 6 weist einen Bremshebel 7 auf, der mit einer parallel zur Bremsscheibenebene angeordneten Zuspannwelle 8 verbunden ist, sowie ein im Bremssattel 1 geführtes und abgestütztes Druckstück 9, in das mindestens eine, bei dem in den Figuren dargestellten Ausführungsbeispiel jedoch zwei Druckspindeln 10, 11 eingeschraubt sind. Zur Bremsscheibe 2 hin weisen die Druckspindeln 10, 11 jeweils einen Druckstempel 12 bzw. 13 auf.

An dem Bremssattel 1 ist ein Deckel 14 mittels Schrauben befestigt. An dem Deckel 14 ist ein (nicht gezeigter) Bremszylinder angebracht, und zwischen dem Bremssattel 1 und dem Druckstück 9 ist eine Druckfeder 41 angeordnet, die die Bremsenteile gegeneinander verspannt. An dem Deckel 14 stützt sich die Zuspannwelle 8 ab, weshalb der Deckel 14 als Widerlager für die Aufnahme von Reaktionskräften F_{R} dient.

Im montierten Zustand liegen eine Stirnfläche 1.1 des Bremssattels 1 und eine Stirnfläche 14.1 des Deckels 14 einander gegenüber.

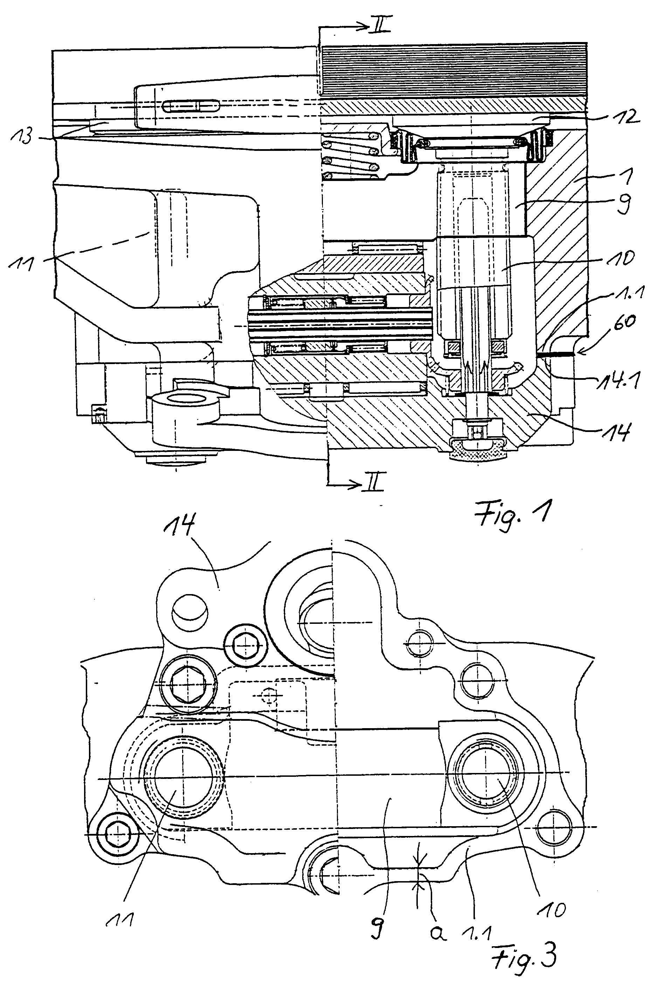

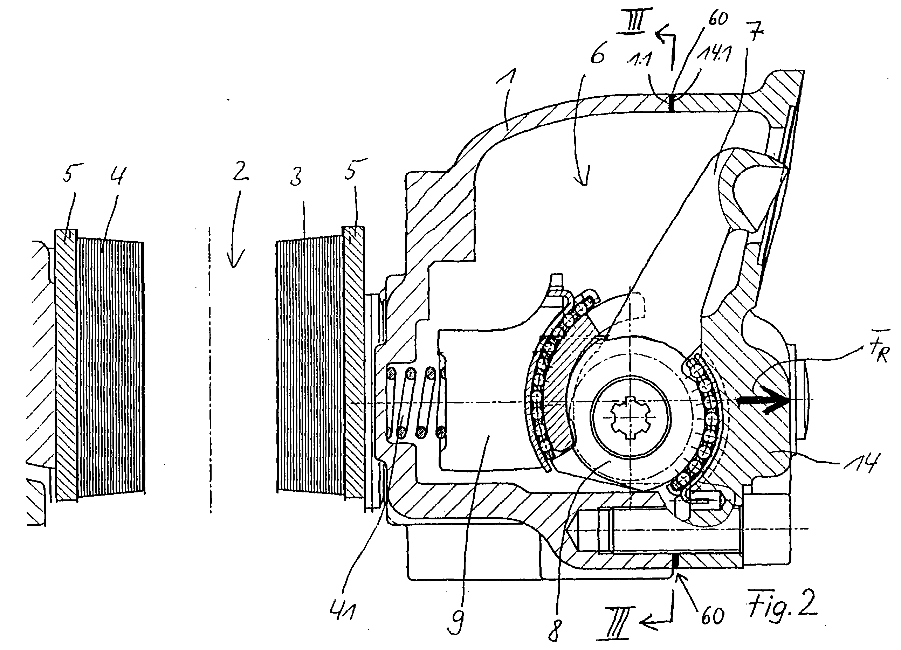

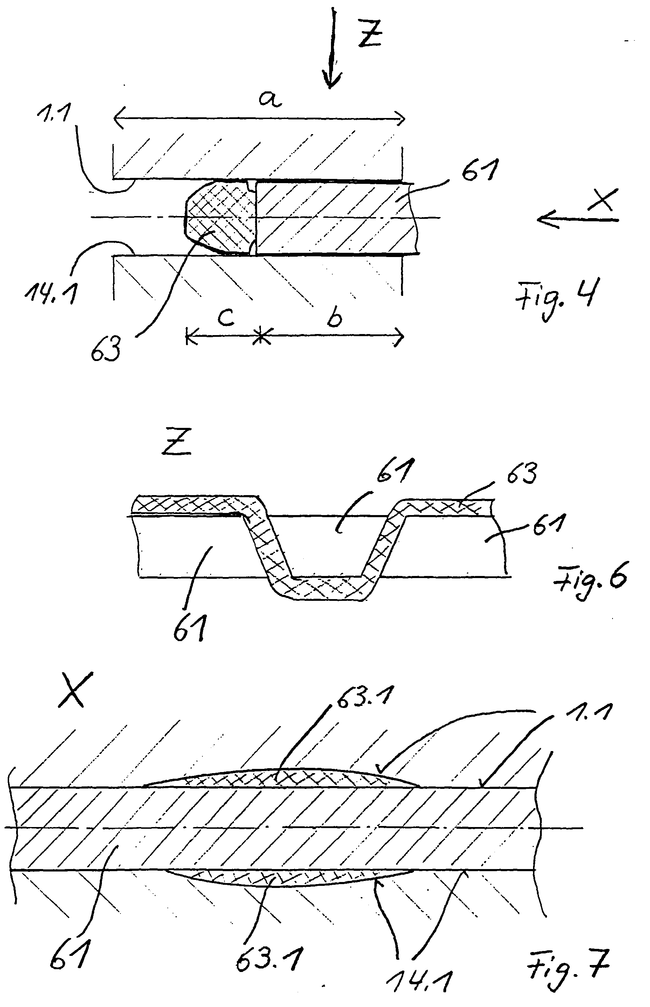

Nach Fig. 4 ist zwischen den Stirnflächen 1.1, 14.1 im Bereich von deren Breite a ein Zwischenteil angeordnet, das in den Fig. 1 und 2 jeweils mit der Bezugszahl 60 bezeichnet ist. Das Zwischenteil 60 besteht aus einer rechteckigen Metalleinlage 61 in einem Abschnitt b und einem an der Stirnfläche 62 der Metalleinlage (vgl. Fig. 5a) befestigten elastischen Element 63 in einem Abschnitt c. Erfindungsgemäß erstrecken sich beidseits über die Dicke der Metalleinlage 61 hinaus zwei Wulstabschnitte 63.1, 63.1 des elastischen Elements 63, wodurch "Wölbungen" und andere Unebenheiten der Stirnflächen sowie Spaltbildungen bei Vollbremsungen in beiden Richtungen elastisch ausgeglichen werden können.

Die Fig. 5a bis 5c zeigen verschiedene Ausführungsformen des elastischen Elements 63 in nicht komprimiertem Zustand. Dabei ist deutlich jeweils ein Freiraum 64 zu erkennen, in den das elastische Element 63 ausweichen kann, wenn es bei Verschraubung des Sattels 1 mit dem Deckel 14 durch die Stirnflächen 1.1 bzw. 14.1 komprimiert wird. Dadurch ist sichergestellt, daß das elastische Element 63 nicht zwischen eine Stirnfläche 1.1 bzw. 14.1 und die Metalleinlage 61 geraten kann.

Wie ebenfalls den Fig. 5a bis 5c zu entnehmen ist, ist das elastische Element 63 im Bereich der Anlage an den Stirnflächen 1.1 bzw. 14.1 jeweils abgeflacht und die Abflachungen verlaufen parallel zueinander und parallel zu den genannten Stirnflächen. Dadurch ist eine besonders breite Auflagefläche sichergestellt.

Wie in Fig. 6 gezeigt, kann das elastische Element 63 auch derart mit der Metalleinlage 61 verbunden sein, daß es entlang der Kontur der Stirnflächen 1.1 bzw. 14.1 beliebig oft von der den Innenraum des Sattels 1 zugewandten Seite zu der dem Innenraum abgewandten Seite verlaufen kann, wenn dafür die Metalleinlage 61 im Übergangsbereich unterbrochen ist. Selbstverständlich sind auch in diesem Fall zwischen der Metalleinlage 61 und dem elastischen Element 63 Freiräume bzw. Einschnürungen 64 vorgesehen.

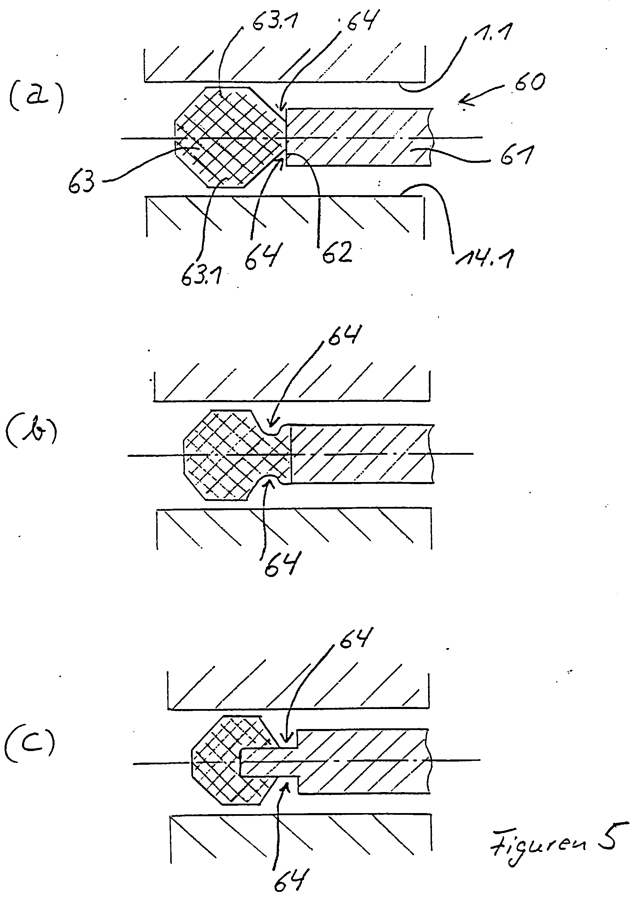

Fig. 7 zeigt die Arbeitsweise der Erfindung. Im Falle der Vollbremsung "wölben" sich die Stirnflächen 1.1 und 14.1, wobei der dadurch entstehende Raum bzw. Spalt von dem elastischen Element 63 bzw. von dessen Wulstabschnitt 63.1 unmittelbar ausgefüllt wird. Ein Eindringen von Schmutz in den Innenraum des Sattels ist damit verhindert.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Bremssattel
- 1.1: Stirnfläche des Sattels
- 2: Bremsscheibe
- 3: Bremsbelag
- 4: Bremsbelag
- 5: Belagträger
- 6: Betätigungsvorrichtung
- 7: Bremshebel
- 8: Zuspannwelle
- 9: Druckstück
- 10: Druckspindel
- 11: Druckspindel
- 12: Druckstempel
- 13: Druckstempel
- 14: Deckel
- 14.1: Stirnfläche des Deckels
- 41: Druckfeder
- 60: Zwischenteil
- 61: Metalleinlage
- 62: Stirnfläche der Metalleinlage
- 63: elastisches Element
- 63.1: Wulstabschnitt
- 64: Freiraum
- a: Breite einer Stirnfläche
- b: Stirnflächenabschnitt
- c: Stirnflächenabschnitt
- F_{R}: Reaktionskraft

## Patentansprüche

1. Sattelscheibenbremse mit einem in mindestens zwei Teile (1, 14) geteilten Sattel, bei der
- die beiden Teile (1, 14) derart angeordnet sind, daß ihre Stirnflächen (1.1, 14.1) einander gegenüberliegen,
- die beiden Teile (1, 14) in Richtung gegeneinander vorgespannt sind und
- die beiden Teile (1, 14) mindestens bei Betätigung der Bremse einer Kraft (F_{R}) ausgesetzt sind, die gegen die Vorspannung wirkt,
gekennzeichnet durch
- einen zwischen den beiden Teilen (1, 14) angeordneten Abstandshalter (61), an dem die beiden Teile (1, 14) mit ihren jeweiligen Stirnflächen (1.1, 14.1) zur Übertragung der Vorspannkraft anliegen, dessen Anlageflächen aber kleiner als die Stirnflächen (1.1, 14.1) sind, und
- ein elastisches Element (63), das zwischen den beiden Teilen (1, 14) in Bereichen der Stirnflächen (1.1, 14.1) angeordnet ist, die nicht an dem Abstandshalter (61) anliegen, und das von den Stirnflächen (1.1., 14.1) gegen seine elastische Rückstellkraft komprimiert wird.

2. Sattelscheibenbremse nach Anspruch 1, dadurch gekennzeichnet, daß der Abstandshalter (61) aus Metall ist.

3. Sattelscheibenbremse nach Anspruch 1 oder 2, dadurch gekennzeichnet, daß der Abstandshalter (61) rechteckigen Querschnitt hat.

4. Sattelscheibenbremse nach einem der vorangehenden Ansprüche, dadurch gekennzeichnet, daß das elastische Element (63) aus Gummi ist.

5. Sattelscheibenbremse nach einem der vorangehenden Ansprüche, dadurch gekennzeichnet, daß das elastische Element (63) an dem Abstandshalter (61) befestigt ist.

6. Sattelscheibenbremse nach Anspruch 5, dadurch gekennzeichnet, daß das elastische Element (63) an dem Abstandshalter (61) anvulkanisiert ist.

7. Sattelscheibenbremse nach einem der vorangehenden Ansprüche, dadurch gekennzeichnet, daß das elastische Element (63) auf der dem Innenraum des Sattels zugewandten Seite des Abstandshalters (61) liegt.

8. Sattelscheibenbremse nach einem der vorangehenden Ansprüche, dadurch gekennzeichnet, daß das elastische Element (63) entlang der Stirnflächen (1.1, 14.1) in Umfangsrichtung durchgehend ausgebildet ist.

9. Sattelscheibenbremse nach einem der vorangehenden Ansprüche, dadurch gekennzeichnet, daß das elastische Element (63) derart angeordnet und/oder gestaltet ist, daß bei nicht komprimiertem elastischen Element (63) benachbart der dem elastischen Element (63) zugewandten Kante der Anlagefläche des Abstandshalters (61) an der Stirnfläche (1.1, 14.1) ein Freiraum (64) festgelegt ist, der groß genug ist, um aufgrund der Vorspannung ausweichendes Material des elastischen Elements (63) aufzunehmen.

10. Sattelscheibenbremse nach einem der vorangehenden Ansprüche, dadurch gekennzeichnet, daR das elastische Element (63) an den den Stirnflächen (1.1, 14.1) zugewandten Seiten abgeflacht ist.
